# EUROPEAN PATENT APPLICATION

(11) **EP 4 760 070 A1**
(43) Date of publication of application: **17.06.2026**
(21) Application number: 25217857.9
(22) Date of filing: 22.11.2025
(51) Int. Cl.: F01N 3/20

(54) **EXHAUST SYSTEM HAVING NOX SAMPLING DEVICE AND EXHAUST CONDUIT ASSEMBLY**

(30) Priority: 11.12.2024 US 202418976961
(71) Applicant: Caterpillar, Inc., Peoria, IL 61629-6450 (US)
(72) Inventor: FOLGER, Nathan, Chillicothe, 61523 (US)
(74) Representative: Klang, Alexander H.

(57) **Abstract**

An exhaust system (10) for an internal combustion engine (12) includes an exhaust conduit (40), and a NOx sampling device (44) arranged to sample a stream of exhaust fed through the exhaust conduit (40) to an exhaust outlet (42). The NOx sampling device will be coupled with a NOx sensor (76) having a sensor probe (78) fluidly connected to a mixing chamber (56) in the NOx sampling device. A plurality of sampling flutes (58, 60, 62) each form an exhaust feed passage (64, 66, 68) to sample the exhaust at locations providing improved sensor reading accuracy.

## Description

### Technical Field

The present disclosure relates generally to an exhaust system, and more particularly to a NOx sampling device in an exhaust system having sampling flutes for improved sensor reading accuracy.

### Background

Internal combustion engines are well-known throughout the world and applicable in virtually innumerable applications including vehicle propulsion, and operation of pumps, compressors, and electrical generators, for example. Combustion of a fuel with air to drive pistons operating to rotate a load is a general process that will be familiar to many. Combustion of any fuel produces exhaust, and depending upon fuel type and operating environment, containing various emissions it is desirable to mitigate.

Combustion of liquid hydrocarbon fuels, for example, can result in emissions of particulate matter, carbon monoxide, carbon dioxide, and various oxides of nitrogen referred to collectively as "NOx". Engineers have experimented for decades with various so-called aftertreatment systems to reduce amounts of certain of these emissions that would otherwise be emitted to the environment.

One well-known aftertreatment system for reducing NOx emissions utilizes a process known as selective catalytic reduction or "SCR". SCR systems reduce NOx to nitrogen and water, considered to be less undesirable to discharge. Most modem SCR systems utilize a reductant carried on board that is selectively delivered into the exhaust system and known generally as diesel emission fluid or "DEF". DEF is a fluid that is carried onboard the engine system or associated machine. For optimum operation of the SCR, as well as cost considerations, it is generally desirable to limit overuse and/or underuse of DEF.

To optimally deliver DEF for purposes of operating an SCR, it can be beneficial to know with relative precision how much NOx is actually in the exhaust, potentially both before and after passing the exhaust through the SCR. A variety of strategies for monitoring NOx have been proposed over the years. One example exhaust aftertreatment system utilizing a NOx sensor is known from United States Patent No. 10,066,535B2. The art provides ample opportunities for improvement and/or development of alternative strategies.

### Summary

In one aspect, an exhaust system includes an exhaust conduit extending to an exhaust outlet, and a NOx sampling device arranged to sample a stream of exhaust fed through the exhaust conduit to the exhaust outlet. The NOx sampling device forms a mixing chamber, and includes a plurality of sampling flutes each forming an exhaust feed passage extending from a respective at least one exhaust admission opening to the mixing chamber.

In another aspect, a NOx sampling device includes a device body extending circumferentially around a center axis, and having an inner surface forming an exhaust conduit section for feeding exhaust to an exhaust outlet, and an outer surface. The device body further forms a mixing chamber arranged radially between the inner surface and the outer surface. The NOx sampling device further includes a plurality of sampling flutes positioned to be exposed to a feed of exhaust through the exhaust conduit section, and each forming an exhaust feed passage extending from a respective at least one exhaust admission opening to the mixing chamber.

In still another aspect, an exhaust conduit assembly includes a NOx sampling device having a device body extending circumferentially around a center axis, and including an inner surface forming an exhaust conduit section, and an outer surface. The device body further forms a mixing chamber, and includes a plurality of sampling flutes arranged to feed exhaust from the exhaust conduit section to the mixing chamber. The exhaust conduit assembly further includes a NOx sensor coupled to the device body and including a sensor probe fluidly connected to the mixing chamber.

### Brief Description of the Drawings

Fig. 1 is a diagrammatic view of an internal combustion engine system, according to one embodiment;
Fig. 2 is an in view of a NOx sampling device, according to one embodiment;
Fig. 3 is a diagrammatic view of a NOx sensor assembly, according to one embodiment;
Fig. 4 is a partially sectioned diagrammatic view of a NOx sensor assembly as in Fig. 3;
Fig. 5 is another sectioned diagrammatic view of the NOx sensor assembly;
Fig. 6 is a sectioned side diagrammatic view of the NOx sensor assembly; and
Fig. 7 is an illustration of a NOx sampling device showing NOx mass fraction in an exhaust system, according to one embodiment.

### Detailed Description

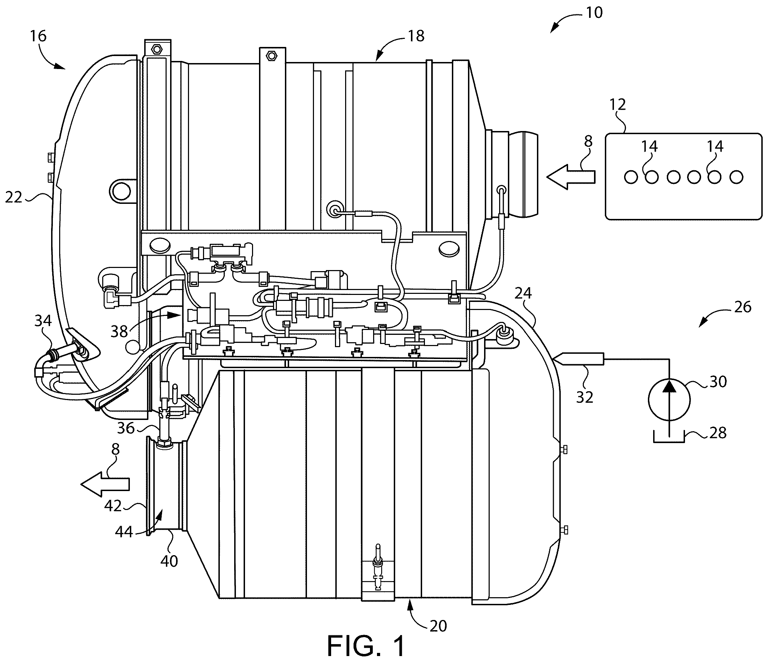

Referring to Fig. 1, there is shown an internal combustion engine system 10, according to one embodiment. Engine system 10 includes an internal combustion engine 12 having a plurality of cylinders 13 formed therein. Engine 12 may include a compression-ignition engine operating on a suitable compression-ignition liquid fuel, such as a diesel distillate fuel. In other instances, engine 12 could be spark-ignited operating on a suitable spark-ignition liquid or gaseous fuel, prechamber ignited, or operated by a variety of other strategies. Engine 12 could also be a dual fuel engine operated on a liquid fuel and a gaseous fuel, or potentially two liquid fuels such as diesel and methanol. Engine 12 could be utilized for any known application, such as operating a driveline in a land vehicle or a marine vessel, or powering a pump, a compressor, or an electrical generator to name a few examples.

Operation of engine 12 produces exhaust shown generally at numeral 8. As discussed above, exhaust flow from an internal combustion engine can include various exhaust constituents that it is desirable to mitigate. To this end, engine system 10 may be equipped with an exhaust system 16 having various aftertreatment components. In the illustrated embodiment exhaust system 16 includes an upstream aftertreatment module 18, a downstream aftertreatment module 20, and connectors 22 and 24 fluidly connecting the respective aftertreatment modules 18 and 20. The present disclosure is not limited to any particular ordering or identity of aftertreatment components except as otherwise discussed herein. By way of example, exhaust system 16 may include a diesel oxidation catalyst (DOC) and a diesel particular filter (DPF) positioned at upstream locations such as within or coupled to upstream aftertreatment module 18. Exhaust system 16 may also include a selective catalytic reduction or "SCR" including components housed in downstream aftertreatment module or SCR module 20. SCR module 20 is operated according to well-known principles. An ammonia oxidation catalysts (AMOX) may also be positioned in or coupled to SCR module 20 to reduce so-called ammonia slip from the SCR, also in a well-known manner.

Exhaust system 16 also includes a diesel emission fluid or "DEF" system 26, including a DEF supply 28, a DEF pump 30, and a DEF injector 32 that is electrically actuated and injects DEF into or upstream of SCR module 20. Exhaust system 16 may also include a first or upstream NOx sensor 34 positioned fluidly between upstream aftertreatment module 18 and SCR module 20, and a second or downstream NOx sensor 36 positioned downstream of or within SCR module 20. Exhaust system 16 also includes a control system 38, including any one or more suitable computerized control units, that calculates how much DEF to inject based on a NOx sensor reading of NOx sensor 34, and then checking its calculation using NOx sensor 36. In this general way, control system 38 can increase DEF dosing if needed, or potentially decrease DEF dosing, based on the reading of NOx sensor 36.

For reasons that will be readily apparent to those skilled in the exhaust system field, it is generally desirable for NOx readings to be accurate, reflecting as close to an actual amount of NOx in an exhaust stream as is practicable. To this end, NOx sensor 36 is associated with unique structures for improving sensor reading accuracy during service. To this end, exhaust system 16 includes a NOx sampling device 44 coupled to SCR module 20 and arranged to sample a stream of exhaust fed through an exhaust conduit 40 of exhaust system 16 extending to an exhaust outlet 42. In a practical implementation, NOx sampling device 44 is fluidly between SCR module 20 and exhaust outlet 42 and may form or be part of an end flange of exhaust system 16 and SCR module 20 that conveys exhaust to a tailpipe or exhaust stack, for example. Put differently, NOx sampling device 44 may be the last piece of equipment involved in aftertreatment of engine exhaust before discharging to a final outlet to atmosphere.

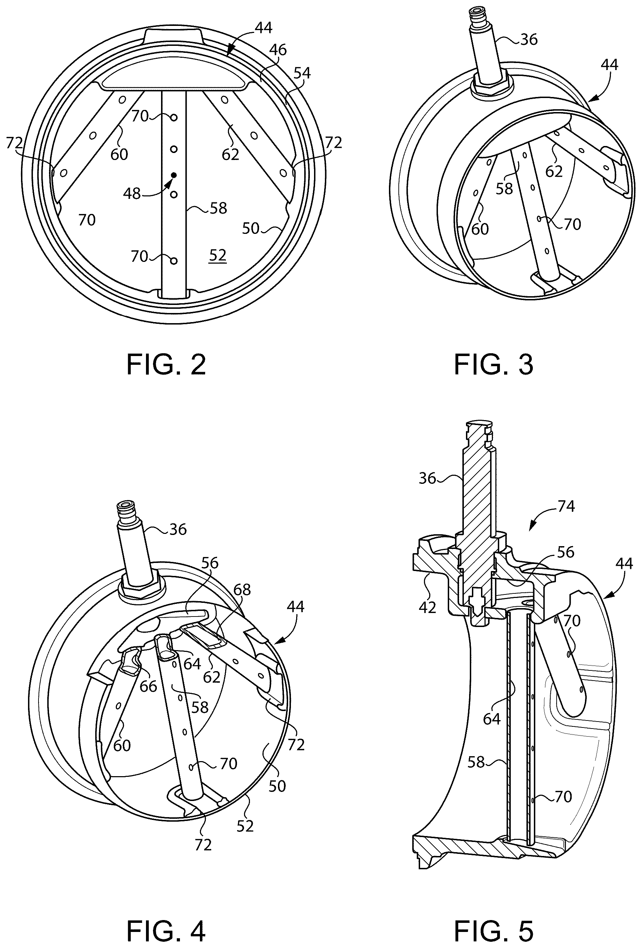

Referring also now to Figs. 2-6, NOx sampling device 44 may include a device body 46 extending circumferentially around a center axis 48. Device body 46 includes an inner surface 50 forming an exhaust conduit section 52, understood as a section of exhaust conduit 40, for feeding exhaust to exhaust outlet 42. Device body 46 also includes an outer surface 54. Device body 46 further forms a mixing chamber 56 arranged radially between inner surface 50 and outer surface 54. NOx sampling device 34 also includes a plurality of sampling flutes 58, 60, and 62 positioned to be exposed to a feed of exhaust through exhaust conduit section 52. Each of sampling flutes 58, 60, 62 forms an exhaust feed passage 64, 66, 68 extending from a respective at least one exhaust admission opening 70 to mixing chamber 56.

In a practical implementation strategy, the plurality of sampling flutes 58, 60 and 62 extend fully across an exhaust flow area defined by exhaust conduit section 52. As can be seen from the drawings, device body 46 may also include a plurality of sampling flute seats 72 formed on inner surface 50 and receiving the plurality of sampling flutes 58, 60, 62. In the illustrated embodiment, each respective at least one exhaust admission opening 70 includes a plurality of exhaust admission holes longitudinally distributed in the respective sampling flute 58, 60, 62.

Also in a practical implementation, an inner diameter dimension of flutes 58, 60 and 62 may be approximately 10.9 millimeters, and an outer diameter dimension thereof may be approximately 12 millimeters. Exhaust admission openings 70 may be approximately 3 millimeters in diameter. "Approximately" in the present context means within measurement error, or another measure of generalization or approximation that would be understood by a person of ordinary skill in the art. A number of exhaust admission openings 70 in each respective flute 58, 60, 62 may be 1, or greater than 1, such as 2, 3, 4, or 5, for example. In other implementations, different configurations than circular holes as illustrated might be used, such as slits, slits having a non-uniform opening diameter, or some other arrangement. Exhaust admission openings 70 might also vary in size within the respective sampling flute 58, 60, 62.

It can also be appreciated that flutes 58, 60, 62 may be elongate, as illustrated. Also in a practical implementation, sampling flutes 58, 60, 62 extend in a mutually divergent arrangement from mixing chamber 56. The plurality of sampling flutes 58, 60, 62 may include a total of 3 sampling flutes in some embodiments. Focusing on Fig. 2, it will be appreciated that inner surface 50 can be understood to define a circle around, and typically centered on, center axis 48. The three sampling flutes as illustrated may include a sampling flute 58 arranged along and/or upon a diameter of the subject circle and two flutes 60 and 62 arranged along or upon respective chords of the subject circle. Exhaust admission openings 70 may open in an upstream direction away from exhaust outlet 42.

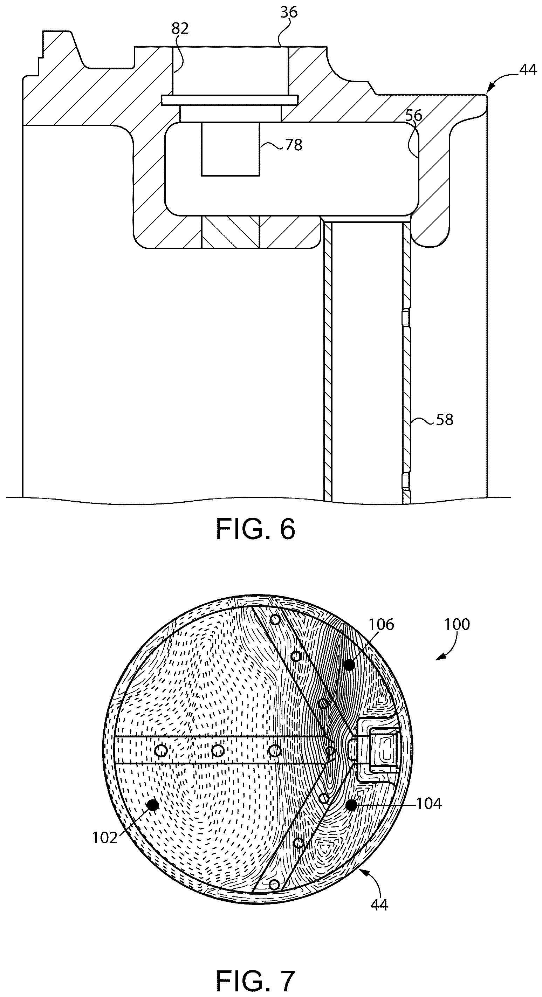

Focusing now on Fig. 5 and 6, it can be appreciated that NOx sampling device 44 and NOx sensor 36 may together form a NOx sensor assembly. In some instances, where device body 46 forms conduit section 52, NOx sampling device 44 and NOx sensor 36 may form an exhaust conduit assembly 74. As best seen in Fig. 5, device body 46 may include an end flange 80 extending circumferentially around exhaust outlet 42. Fig. 6 shows a sensor aperture 82 of NOx sampling device 44 extending radially through device body 46 to mixing chamber 56. Sensor aperture 82 receives NOx sensor 36. NOx sensor 36 includes a sensor probe 78 fluidly connected to mixing chamber 56.

### Industrial Applicability

Still referring to the drawings generally, but also now to Fig 7, there is shown an illustration 100 of NOx sampling device 44 as it might appear within a flow of exhaust from an engine. In Fig. 7, region 102 shows an example area where NOx provides a relatively low mass fraction of the exhaust stream. Region 104 shows where NOx is at a medium level of mass fraction of the exhaust stream. Region 106 shows where NOx is a higher mass fraction of the exhaust stream. It will be readily apparent that the relative concentration of NOx is anything but uniform, with much of the NOx being biased in distribution towards one side of the exhaust conduit in the particular example illustrated.

Certain known NOx sampling devices propose placing a single sampling tube across or partially across an exhaust conduit. In view of Fig. 7 it will be appreciated that a single sampling tube or the like could be collecting samples of exhaust that appear relatively higher in concentration or relatively lower in concentration, and thus do not accurately reflect an actual amount of NOx in the exhaust stream. In contrast, the present disclosure provides for a much more robust sampling of the exhaust stream. Fig. 7 is one snapshot of what NOx mass fraction distribution might look like at one time. Over the course of engine operation various factors could cause the distribution of NOx to change. Thus, the present disclosure is also more robust to variation in distribution of NOx in the exhaust stream.

The present description is for illustrative purposes only, and should not be construed to narrow the breadth of the present disclosure in any way. Thus, those skilled in the art will appreciate that various modifications might be made to the presently disclosed embodiments without departing from the full and fair scope and spirit of the present disclosure. Other aspects, features and advantages will be apparent upon an examination of the attached drawings and appended claims. As used herein, the articles "a" and "an" are intended to include one or more items, and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. An exhaust system (16) comprising:
an exhaust conduit (40) extending to an exhaust outlet (42);
a NOx sampling device (44) arranged to sample a stream of exhaust fed through the exhaust conduit to the exhaust outlet; and
the NOx sampling device forming a mixing chamber (56), and including a plurality of sampling flutes (58, 60, 62) each forming an exhaust feed passage (64, 66, 68) extending from a respective at least one exhaust admission opening (70) to the mixing chamber.

2. The exhaust system of claim 1 further comprising:
a selective catalytic reduction (SCR) module (20) arranged to treat the exhaust fed through the exhaust conduit, and the NOx sampling device is arranged fluidly between the SCR module and the exhaust outlet in the exhaust system; and
an upstream aftertreatment module (18) and an upstream NOx sensor (34) arranged fluidly between the upstream aftertreatment module and the SCR module in the exhaust system.

3. The exhaust system of claim 1 or 2 further comprising a NOx sensor assembly (44, 36) including the NOx sampling device and a NOx sensor having a sensor probe (78) fluidly connected to the mixing chamber.

4. The exhaust system of any of claims 1-3 wherein the NOx sampling device includes a device body (46) extending circumferentially around a center axis, and a sensor aperture (82) extending radially through the device body to the mixing chamber.

5. The exhaust system of claim 4 wherein the device body forms a conduit section of the exhaust conduit.

6. The exhaust system of any of claims 1-5 wherein the plurality of sampling flutes each extend across the exhaust conduit, and each respective at least one exhaust admission opening includes a plurality of exhaust admission holes longitudinally distributed in the respective sampling flute and opening in an upstream direction away from the exhaust outlet.

7. The exhaust system of any of claims 1-6 wherein the plurality of sampling flutes includes a total of three sampling flutes, and the plurality of sampling flutes extend from the mixing chamber in a mutually divergent arrangement.

8. A NOx sampling device (44) comprising:
a device body (46) extending circumferentially around a center axis, and including an inner surface (50) forming an exhaust conduit (52) section for feeding exhaust to an exhaust outlet (42), and an outer surface (54);
the device body further forming a mixing chamber (56) arranged radially between the inner surface and the outer surface; and
a plurality of sampling flutes (58, 60, 62) positioned to be exposed to a feed of exhaust through the exhaust conduit section, and each forming a feed passage (64, 66, 68) extending from a respective at least one exhaust admission opening (70) to the mixing chamber.

9. The NOx sampling device of claim 8 wherein the plurality of sampling flutes extend fully across an exhaust flow area defined by the exhaust conduit section, and the device body includes a plurality of sampling flute seats (72) formed on the inner surface and receiving the plurality of sampling flutes.

10. The NOx sampling device of claim 8 or 9 wherein each respective at least one exhaust admission opening includes a plurality of exhaust admission holes longitudinally distributed in the respective sampling flute, and wherein the plurality of sampling flutes extend in a mutually divergent arrangement from the mixing chamber.

11. The NOx sampling device of any of claims 8-10 wherein the plurality of sampling flutes includes a total of three sampling flutes.

12. The NOx sampling device of claim 11 wherein the inner surface defines a circle around the center axis, and the three sampling flutes include a central flute (58) arranged along a diameter of the circle and two flutes (60, 62) arranged along respective chords of the circle.

13. An exhaust conduit assembly (74) comprising:
a NOx sampling device (44) including a device body (46) extending circumferentially around a center axis, and having an inner surface (50) forming an exhaust conduit section (52), and an outer surface (54);
the device body further forming a mixing chamber (56), and including a plurality of sampling flutes (58, 60, 62) arranged to feed exhaust from the exhaust conduit section to the mixing chamber; and
a NOx sensor (76) coupled to the device body and including a sensor probe (78) fluidly connected to the mixing chamber.

14. The exhaust conduit assembly of claim 13 wherein the exhaust conduit section includes an end flange (80) extending circumferentially around an exhaust outlet (42).

15. The exhaust conduit assembly of claim 13 or 14 wherein:
each of the plurality of sampling flutes includes a plurality of exhaust admission holes longitudinally distributed in the respective sampling flute and opening in an upstream direction away from the exhaust outlet; and
the inner surface defines a circle around the center axis, and the plurality of sampling flutes includes a central flute (58) arranged along a diameter of the circle and two flutes (60, 62) arranged along respective chords of the circle.
